# EUROPEAN PATENT SPECIFICATION

(11) **EP 3 124 841 B1**
(45) Date of publication and mention of the grant of the patent: **18.10.2023**
(21) Application number: 14887017.3
(22) Date of filing: 28.03.2014
(51) Int. Cl.: F16L 1/026, F17D 5/00, G01S 19/14

(54) **METHOD AND SYSTEM FOR MONITORING THE POSITION OF ABOVE-GROUND PIPELINES IN PERMAFROST CONDITIONS**
VERFAHREN UND SYSTEM ZUR ÜBERWACHUNG DER POSITION VON OBERIRDISCHEN ROHRLEITUNGEN UNTER PERMAFROSTBEDINGUNGEN
PROCÉDÉ ET SYSTÈME DE CONTRÔLE DE LA POSITION DE CONDUITS POSÉS EN SURFACE DANS DES CONDITIONS DE GEL PERMANENT

(43) Date of publication of application: 01.02.2017
(73) Proprietor: Public Joint Stock Company "Transneft", Moscow 119180 (RU); Limited Liability Company "Transneft Research and Development Institute for Oil and Oil Products Transportation", Moscow 117186 (RU)
(72) Inventor: LISIN, Yury Viktorovich, Moscow 119180 (RU); REVEL-MUROZ, Pavel Aleksandrovich, Moscow 119180 (RU); ZARIPOV, Zufar Amirovich, Kazan 420124 (RU); SOSCHENKO, Anatoly Evgenievich, Moscow 119180 (RU); KHABAROV, Aleksei Vladimirovich, Moscow 117525 (RU)
(74) Representative: Spengler, Robert
(86) International application number: PCT/RU2014/000221
(87) International publication number: WO 2015/147686

(56) References cited:
- WO-A1-2008/046209
- RU-C1- 2 317 466
- RU-C1- 2 451 874
- RU-U1- 49 251
- US-A1- 2001 029 989
- US-A1- 2010 207 620
- 'VSN 013-88. Vedomstvennye stroitelnye normy.' STROITELSTVO MAGISTRALNYKH I PROMYSLOVYKH TRUBOPROVODOV V USLOVIYAKH VECHNOI MERZLOTY. 01 January 1989, MOSCOW, pages 1 - 4 , 13-17, XP055356115
- 'VRD 39-1.10-006-2000.' PRAVILA TEKHNICHESKOI EKSPLUATATSII MAGISTRALNYKH GAZOPROVODOV (PTE MG ). 01 December 2002, MOSKVA, pages 1 - 3 , 20-26, 11-121, XP008184051

## Description

### TECHNICAL FIELD

The invention relates to the field of engineering geodesy and can be used for monitoring of the condition including the position and the deformation of pipelines.

The claimed invention relates to the monitoring of above-ground major pipelines - extended objects which routes are laid under different topographic, geological, hydrogeological and weather conditions including in permafrost soil areas. As a result of the cumulative effect of such conditions, the deformation of the pipe and the ground is possible. Thus, one of the important controlled parameters is the planned high-altitude position (PHAP) of the linear part of the pipeline.

### PRIOR ART

US2010/207620 A1 discloses an inspection apparatus and method for detecting flaws in electrically conductive material. The claim KR20110057066 (IPC G08B 21/18, published on 24.12.2012) discloses the method of control under condition of the oil pipeline that consists of collection of the information about the condition of the pipeline upon different channels, including the video channel, infrared rays etc. and based on the combination of treated results of the stream data from all information channels that allows to draw the conclusion about the condition of the pipeline. The method has the high precision of measurement, however, the use of the claimed method in high latitudes and distant regions is not possible because it is impossible to provide for the electrical supply, stability of operation and reliability of the precision instrument set due to extremely low temperature and remoteness from settlements.

Ways and methods of the geotechnical monitoring of the above-ground pipeline condition are described in the author's abstract "Control of the deformed condition of above-ground pipelines in the permafrost zone" of the thesis work by A.S. Vitchenko. Methods for monitoring the deformed condition of above-ground pipelines are used during planning and implementation of repair and restoration works in gas-field pipelines including process pipelines of BCS bindings (The Scientific Library of theses and author's abstracts disserCat http://dissercat.com). The work determines allowed geometrical parameter values of the deformed state of above-ground pipelines. To determine evaluation criteria for the deflected condition of pipelines the parameters are used that describe the geometrical form of deformed portions such as the slope of the straight-line portion of the pipeline, the change of deflection compared with the basic measurement. These data are also obtained upon indices of deformation control benchmarks.

The prior art also discloses the invention upon the RF patent No. 2357205 (IPC G01B11/16, published on 27.05.2009) that is related to the system for determination of deformations in construction structures and buildings. The known device consists of the motorized electronic tachometer with the glass protective cap installed inside the building with the foundation block, the support contour and the cover.

The tachometer is linked by the cable with the computer and has the option of the optical contact with deformation control benchmarks as triple prismatic reflectors installed on controlled construction structures. The benchmarks installed on the cover are fixed by clamps on outputs of the cover. One of these benchmarks is the control one and equipped by the additional reflector. The distance between reflectors is attested in a metrological method upon measured coordinates.

The drawback of the system is that the electronic tachometer cannot be provided by the constant electrical feeding under conditions of the remoteness of the pipeline and permafrost. Moreover, precise positioning and workability may be interrupted if the tachometer is installed in the remote location with no security and under conditions of atmospheric and natural impacts.

It is known the RF patent for the invention No. 2413055 (IPC E02D1/08, published on 27.02.2011) that is related to the method for measurement of foundation settlements that includes periodical measurements of the position of the benchmark located on the foundation in relation to the virtually immovable marker. The position of the benchmark upon the height is measured by the sensor of linear movements with the convertor of values to the electrical signal in relation to the virtually immovable marker located under the benchmark in the ground below the soil freezing and the zone of its deformation from the foundation.

The drawback of the method is the absence of the option to switch on feeding of sensor taking into account the big number of them on the major pipeline. Moreover, the application of the known measurement method is quite narrow and it is not available for the use as the means for monitoring of major pipelines because there are no means for accumulation and treatment of the date.

The objective of the claimed technical solution is the increase of the operational reliability and the environmental safety of high-pressure pipeline systems that enable transportation of hazardous liquids and gases on the oil and gas complex objects due to introduction of the modern monitoring and diagnostic methods for pipeline systems that suggest the overall evaluation of their technical condition and correspondence of the current parameters to technical values, in particular, to the planned high-altitude position.

The technical result achieved by the use of the claimed invention is the use of the complex of interrelated monitoring measures that include the control under the position of deformation control benchmarks with the help of optical geodetic devices and with the help of mobile satellite geodetic transmitters, the use of the state coordinate system only at the initial stage to attach sites of the network to the local coordinate system, the decrease of time and labor for works aimed to determine coordinates of the oil pipeline for operational needs, simplification of procedures for communication, storage and transmission of the data about the planned high-altitude position of oil pipelines during measurements upon the increase of authenticity (precision) and the rate of formation of the result for the obtained data about the current condition of pipelines and support.

High quality of the system for the control under pipeline supports is provided by:
- the stable spacial position of the sites in the local geodetic network;
- the option to control stability of the spacial position of the sites in the local geodetic network at every measurement of the pipeline PHAP;
- highly precise determination of the mutual position of neighboring network sites;
- the adequate density of claims and the short time period needed to measure coordinates with Public Joint Stock Company "Transneft", et al high precision;
- simple and available measurement procedures for the staff of the operating company.

### SUMMARY OF THE INVENTION

The objective is solved by the invention which is defined in the independent claims. The method monitoring a position of above-ground pipeline position under the permafrost conditions, according to invention, is defined in claim 1.

A further aspect of the invention is given by the system of claim 11. |

### OUTLINE OF THE DISCLOSURE

During installation of ground deep benchmarks and reference stations, their coordinates are detected in the state network, at this obtained coordinates are translated to local coordinates with the help of the key. Local coordinates are transmitted to the server after which the zero cycle for measurement of deformation control benchmarks coordinates is performed in the local system of coordinates in relation to ground deep benchmarks.

1-3 minutes are needed for a single measurement. Compare with the application of the traditional method for measurement of sites coordinates via the "'Static" mode, i.e. with no automatized network, that requires 20-30 minutes for measurement of 1 sites coordinates and also requires posttreatment of the data using special software on a mobile computer or WKS. Data of the zero planned high-altitude position of the pipeline is taken from deformation control benchmarks and deep benchmarks and this data is transmitted to the server where, upon results of all zero cycle measurements, the design digital model of the pipeline is built. Then, at every control measurement the data of the deformation control and deep benchmarks about the current planned high-altitude position (PHAP) is taken with the help of a rover, then the data is transmitted to the server where the current digital model of the pipeline is built and compared with the design digital model of the pipeline and parts of the pipeline are detected on which deflection of its current position from the design one is higher than acceptable values and, thus, the part of the pipeline with deflected position of supports is detected. The data of the current planned high-altitude position on the zero cycle is taken by the optical control devices, during the first year of the pipeline service the PHAP data are taken by the rover no less than once a month and then, during service, no less than twice a year. Deformation control benchmarks used for implementation of the claimed method are made of the rolled steel, for instance, the angle steel, pipe or bar, with formation of the sharp angle, at this benchmarks are fixed to the metal pilework or to the head of the support pile in such way that the top of the sharp angle is the top point of the deformation control benchmark the position of which is the point of taking the data of the pipeline support foundation. Deep benchmarks used for the sensor data is sent to the server with the help of the fiber-optic communication link or with the help of the radio modem via the reference station. If the rover is removed from reference stations to the distance of no more than 8-10 m, the PHAP measurement error is no more than ±25 mm, and if the rover is removed from reference stations to the distance of 15-20 km, the PHAP measurement error is no more than ±40 mm. Each reference station contains the receiver with the aerial global navigation satellite system (GNSS) with multi-path and re-reflected signal suppression systems, the device for fixation to an immovable object; the interface to switch the computer with the controller function to set up the equipment of the permanent reference station; the software to perform main functions of the reference station; the standby power unit (if necessary).

### BRIEF DESCRIPTION OF DRAWINGS

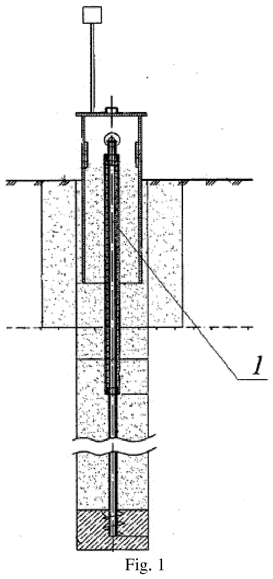

Figure 1 outlines the option for installation of the deep benchmarks.

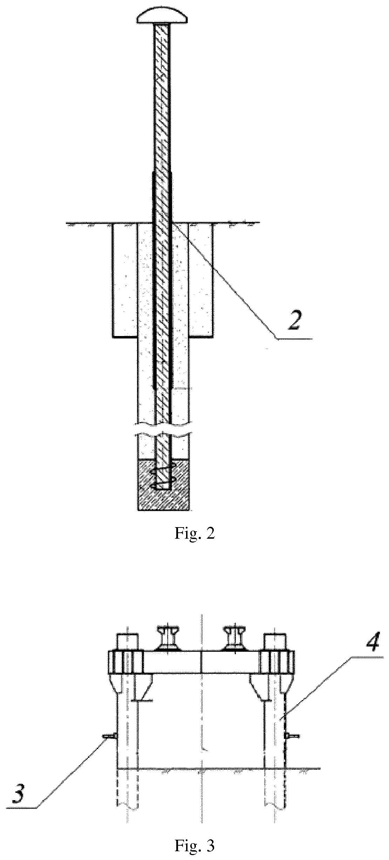

Figure 2 outlines the possible option for installation of the reference station aerial.
Figures 3, 4 outline options for installation of the deformation control benchmarks on the pile of the support foundation.
Figures 5-11 outline the mutual location of deformation control benchmarks, deep benchmarks, reference stations, benchmarks of the state geodetic system and their interrelation.

Positions on the drawing are as follows:
1- the deep benchmark of the local geodetic network, 2 - the reference station, 3 - the deformation control benchmark, 4 - the pile, 5 - the pipeline, 6 - the pipeline support, 7 - the server, 8 - means of measurement, 9 - the benchmark of the state geodetic network.

### THE PREFERRED EMBODIMENT OF INVENTION

The claimed method is implemented during service of the pipeline at the geodetic network device. However, first necessary measures are taken as early as at the stage of the pipeline assemblage and installation of supports.

The geodetic network on the major pipeline fixes the single system of coordinates (or several interrelated systems of coordinates). Precision of the network building provides for evaluation of the safety margin and the residual resource of the pipeline in the condition monitoring mode. The geodetic network is built along the pipeline as reference stations (above-ground geodetic sites) linked with the data processing center and placed in its units and as many special deformation control benchmarks fixed on the pipeline support. Special geodetic transmitters of the navigation signal from global navigation satellite systems (GNSS) are used as reference stations.

To control the high-altitude position of the oil pipeline, the condition of the accompanying objects as well as the condition and effectiveness of engineering protection measures during the period of the major pipeline construction and service the geotechnical monitoring is necessary for which the following preparation measures are taken.
1. Deep benchmarks 1 are installed along the pipeline 5. The deep benchmark consists of the metal pipe (the benchmark pipe) with the diameter of 57 mm, 11.6 m long, the benchmark head and the concrete "anchor" installed into the bore with the diameter of 500 mm. The special spherical head is welded to the top part of the benchmark pipe. It is made of stainless steel with the polished spherical surface with the radius of 25 mm. The 3-mm deep hole is drilled into the spherical head. The lower part of the deep benchmark is equipped by the "anchor" to increase stability and counteraction to possible frost heaving forces. The "anchor" may be made by two methods: on the place of the benchmark assemblage or in a factory. If the "anchor" is made in the field (on the site of the benchmark assemblage), the sheet that is 4 mm thick, 50 mm wide and 1,000 mm long is welded at the end of the benchmark pipe as a "screw". Then the concrete and sand solution that is 20 cm thick fills the bore with the installation of the embedded detail. The embedded detail is made of the pipe with the diameter of 57 mm, the 4x50 mm sheet welded to it. The "anchor" is linked to the benchmark pipe with the help of the screw joint. The benchmark pipe is protected against frost heaving forces with the help of the protective pipe with the diameter of 89 mm with two sealing cuffs at ends. The space between the benchmark and the protective pipes is filled by the lubricant TSIATIM 221 or its analogue, taking into account the lubricant service life of no less than 40 years and the service temperature range from minus 60 to plus 150 °C. To protect the deep benchmark from destruction or damage, it is equipped by the protective case made of the metal pipe with the diameter of 426 mm filled with the sand nonfrost-susceptible soil. The protective case is installed into the pre-drilled bore with the diameter of 500 mm. The lid of the case is also made of the pipe with the diameter of 426 mm made of the sheet steel that is 8 mm thick. For the lid to be tightly closed on the case, 4 special guideways that are 200 mm long and made of the pipe segments with the diameter of 426 mm are welded to the internal surface of the case. The special identification mark is welded at the top of the lid. It is made of the fittings that are 800 mm long and of the metal sheet that is 3 mm thick. It bears the number of the benchmark, the name and contacts of the operating company. Banking around the deep benchmark within the radius of 1.0 m and to the depth of the maximum seasonal thawing (2.5 m) is made of nonfrost-susceptible soils (dry medium- or small-grained sand).
2. Deformation control benchmarks are installed on all supports of the controlled pipeline as geodetic marks 3. The marks used for surveillance under deformations of the above-ground oil pipeline are installed on piles 4 of the support 6. Deformation control benchmarks are made of the rolled steel (reinforced, round steels, angles etc.) with facing to obtain the spherical surface at the vertical installation of the angle or at cutting of the angle for the fixed installation of the rail if the angle is installed in the horizontal position. The deformation control benchmark may be directly fixed on the load-bearing structure or through the additional channel section. The fixture is usually made by the welded seam to pile heads. Deformation control benchmarks are given the index number for accounting and their high-altitude position is zero measured. The number of marks fixed on the pipeline significantly depends on requirements to precision of the PHAP values measurement and functions of the in-line inspection device.
3. The network of permanent reference stations 2 is installed along the pipeline. This network services the whole territory of the major pipeline linear part. The network of reference stations is the unit of permanent satellite (GNSS) reference stations installed at the site upon the preset scheme, the relevant position of which is determined in the single system of coordinates, united by communication channels for collection and processing of the geodetic data in the single geodetic data storage and processing Center (GDSPC server) to provide for measurements and detection of the spatial position of objects on the large territory with the equal precision and in the single time and space counting system. Reference stations are placed on buildings and structures within the service zone of the major pipeline or on special deep benchmarks, i.e. two types of stations are installed - with the bit and with the external aerial part which is fed by any possible energy source (the high-voltage power line, the independent source) and stations installed on the block box of isolation valve management. Stations of the second types are containers fixed on the roof of the block box where screens for management of the automatic reference station are concentrated.

The equipment of permanent reference stations includes:
- multi-frequency navigation units of GLONASS or GLONASS/GPS consumer of the phase mode;
- the multi-frequency GLONASS or GLONASS/GPS geodetic GNSS aerial with multi-path and re-reflected signal suppression systems, the phase center eccentricity rate of no more than 2 mm, the device for their fixture on an immovable object;
- the computer with the controller function to set up the equipment of the permanent reference station;
- the software to perform main functions of the reference station;
- the standby power unit (if necessary);
- conditioner (if necessary).

The customer equipment includes mobile stations (rovers) equipped by multi-frequency navigation units of the GLONASS or GLONASS/GPS consumer with the phase use mode and communication means. The customer equipment includes the following equipment:
- the multi-frequency navigation units of GLONASS or GLONASS/GPS consumer of the phase mode;
- the multi-frequency compact GLONASS or GLONASS/GPS aerial of the geodetic class;
- the controller and the software to perform main functions of the mobile station;
- the mobile computer with the special software to accumulate and process field measurements, with the option to switch it to the network, for collection of the navigation data stored in the GDSPC (geodetic data storage and protection center) (only for the delayed processing mode "POST"). The design solution of the customer equipment is not subject to the claimed invention and not represented on figures.

The geodetic data storage and protection center (GDSPC) is installed in the administrative building for administration of the oil pipeline that includes one or several servers with the special network software. The computer center performs:
- communication with satellite transmitters of individual basic stations, setup of their internal parameters;
- receipt of the data from basic stations, quality test, automatic record of data files to the hard disc of the computer (the administration center server);
- transfer of the data to RINEX format, storage of files on the FTP server or the website for Internet user access;
- formation of the adjusting information for the users that detect their location on the online mode within the coverage area of the basic station network;
- transfer of the adjusting data via different communication channels (radio, cellular network, Internet);
- generation of messages and maintenance of the event log during operation of the administration center, notification to the operator of the administration center about changes in the condition of the basic station satellites, communication lines and users that interact with the system.

Moreover, the software of the administration center helps to organize the control under the online user interaction with identification of users and accounting of RTK measurement sessions, the automatic processing of user measurements together with the basic station data, calculation of the coordinates of the user objects and creation of reports.

GDSPC must provide:
- continuous receipt of the data of global navigation satellite systems from permanent reference stations;
- long-term storage (for no less than 1 year) of the received data from every permanent reference station;
- complex mathematical processing of the data that are received in the online mode from permanent reference stations;
- online visualization of the data received from permanent reference stations and result of their processing;
- remote diagnostics of permanent reference stations;
- remote configuring of permanent reference stations;
- remote programming of permanent reference stations;
- high reliability and fail-safety.

The equipment of the GPS/GLONASS receiver must include:
- the multi-frequency navigation units of the GLONASS consumer or GLONASS/GPS of the phase mode;
- the multi-frequency compact GLONASS or GLONASS/GPS aerial of the geodetic class;
- controller and the software to perform main functions of a mobile station;
- the mobile computer with the special software to accumulate and process field measurements, with the option to switch to the network, to receive the navigation data stored in the GDSPC (only for the delayed processing mode "POST").

GPS/GLONASS transmitters must be specially developed for the use in reference station networks.

The satellite equipment of GLONASS or GLONASS/GPS systems is used for geodetic works on permanent reference stations.

The high-altitude position of the pipeline is set up by spatial coordinates of its axis in control points.

To implement the claimed method with the use of the equipment and units described above, the following is applied.

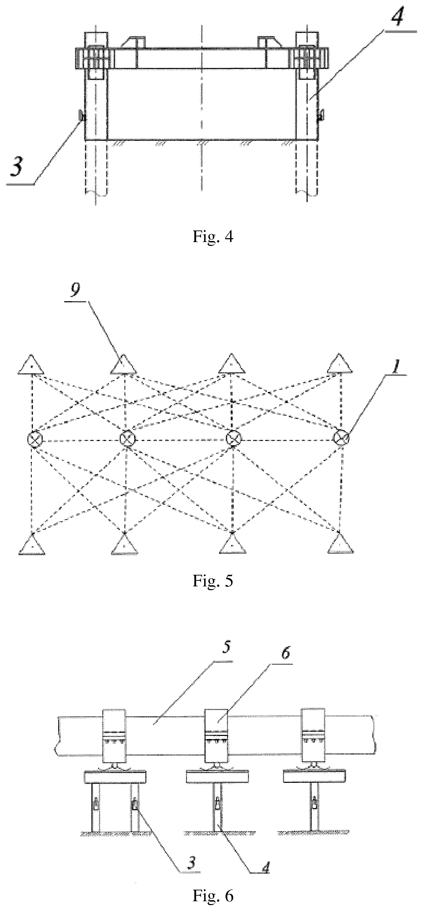

Figure 5 outlines the first stage of implementation of the claimed method - creation of the local support geodetic network consisting of deep benchmarks 1, which coordinates are determined upon benchmarks of the state geodetic network 9 by detection of coordinates and high-altitude marks and then with the help of the key are translated to coordinates of the local geodetic network. The local geodetic network is installed along the pipeline. The number of sites that determine the PHAP must be no less than the number provided by the documents that regulate the location survey at the life-size offset of the pipeline route. According to the rules of the location survey, control points are detected no less than at every 100 m, and at every 10 m on individual sites and additionally at sites where the direction of the pipeline axis is changed including profile bending points.

Figure 6 outlines the second stage of implementation of the claimed method - installation of deformation control benchmarks 3 on supports 6 of the above-ground pipeline.

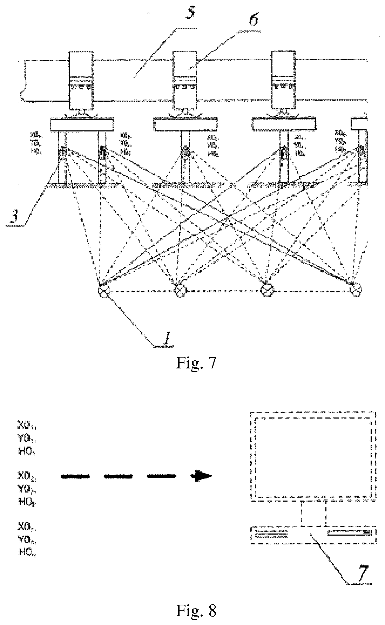

Figure 7 outlines the third stage of implementation of the claimed method - carrying out of the zero cycle for measurement of deformation control benchmarks, receipt of their coordinates and high-altitude marks in relation to coordinates of benchmarks in the local support geodetic network. Coordinates of marks are measured with the help of measurement means 8, i.e. optic geodetic devices (the level, the transit, the tachometer). Thus, the database of the zero measurement cycle is formed that characterizes the design position of the pipeline. The database and the digital pipeline model that contains values of the pipeline PHAP are stored on the server 7.

Figure 8 outlines the fourth state of implementation of the claimed method - receipt and processing of the data of the zero measurement cycle and building of the digital pipeline model upon taken indices. The data is transferred to the server 7 that performs the said procedures and stores the processed data for the further use.

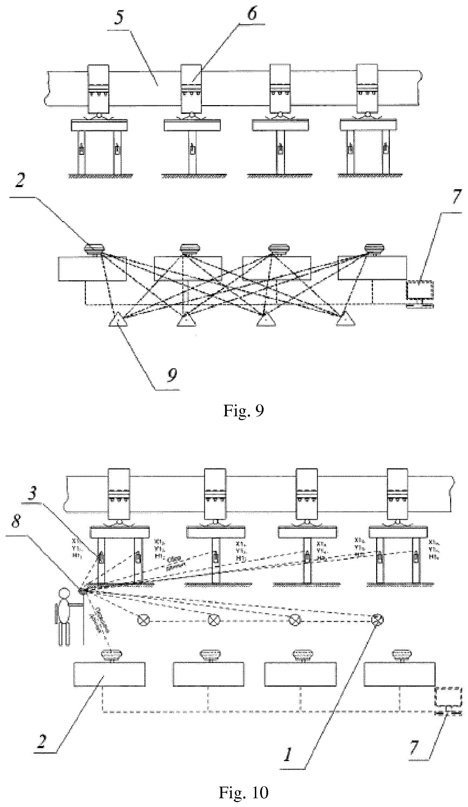

Figure 9 represents the location of reference stations 2 and detection of their coordinates upon benchmarks of the state geodetic network 9 with the further translation to local geodetic coordinates by the key. Reference stations give the adjusting data for the highly precise detection of the coordinate data on the site with the help of rovers. The material implementation of the local system of coordinates is provided by the network of geodetic sites located at the site and built as a complex of interrelated reference stations.

Figure 10 outlines the process of local measures for control under the pipeline position. The operator, using the rover that receives the adjusting data from reference stations, collects the coordinate data and high-altitude marks from deformation control benchmarks and deep benchmarks. This data is transferred to the server for analysis and processing.

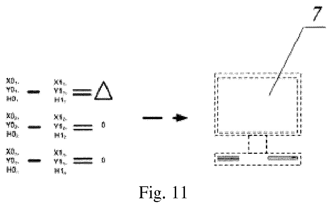

Figure 11 represents the final stage of implementation of the claimed method that is comparison of the data received and processed by the server at formation of the zero measurement cycle with the data of the current measurement cycle received from rovers. Upon results of this comparison, the server detects identity of the zero and the current position of measurement points or records deflection. If during processing the server detects deflection of this or that measurement point from the zero cycle value, this point is identified upon coordinates related to it, the troubled part of the pipeline is localized and measures for recovery of the pipeline design position and, consequently, of the measurement point are taken.

The server must be provided by the continuous connection with reference stations and receive the data with the preset frequency of updates. Different methods may be used for the data transfer from reference stations to the server (to the administration center):
continuous analog or digital modem lines may be used. The modem in the administration center may be linked to the COM directly, through RS232, but if several reference stations must be linked, the router of CISCO type may be used. The router is used for the data transfer via LAN to the computer of the administration center. This is the expandable solution taking into account the number of supported lines and it allows to use virtually limitless number of data transfer lines. The computer with the installed GPSNet system receives this data via IP from the CISCO router. Remote reference stations are identified upon TCP/IP numbers;
Frame Relay-based link may be used. Although this method is not always available with the use of telephone networks, it may be the best method of the long-distance data transfer. In this case, the data converter for RS-232 protocol must be used on the basic station. When only Frame Relay is used for the data transfer, the simpler router may be installed in the administration center. At such configuration, each remote station has its own IP address and the router translates the data from Frame Relay to LAN and vice versa;
the data may also be transferred via Internet with the use of DSL or any other access. In this case, the serial busy interface must be translated to TCP/IP.

Oil and gas complex objects are complex, dynamic and open geotechnical systems (GTS) that interact with the environment (external). The negative effect of such objects change features and condition of the environment. In its turn, the environment and its change affect the objects. Such interaction is clearly seen under permafrost conditions. Permafrost formations (PFF) used as foundations of engineering objects may be in both hard frozen and plastic frozen conditions. Due to that, the load-bearing capacity of PFF is changed that leads to deformations of engineering objects. When critical parameters are achieved, deformation may cause emergency situations on the oil and gas complex objects as well as urgent repair works that require additional financial and economic expenses. The information about the technical and spatial-temporal condition of the GTS may be obtained with the help of the correctly organized geodetic monitoring. The geodetic monitoring of such objects is made at all stages of the life cycle of structures: research, construction, operation or their elimination.

## Claims

1. A method for monitoring a position of above-ground pipelines (5) under permafrost conditions, whereby it includes:
installing deformation control benchmarks (3) on piles of the foundations of pipeline supports (6) at a distance of at least 0.5 m from a ground surface,
installing ground deep benchmarks (1) at a distance of no more than 1.5 km from each other and at least 50 meters from the supports,
**characterised by**:
installing reference stations (2) along the pipeline at the distance of 20-40 km from each other that are adapted to receive and transfer data to a server (7), the reference stations each having a multi-frequency GLONASS or GLONASS/GPS navigation unit employing phase use mode,
during installation of ground deep benchmarks and reference stations, detecting their coordinates in the state geodetic network and translating the detected coordinates to local coordinates and transferring them to the server, performing a zero measurement cycle to measure coordinates of the deformation control benchmarks in relation to the ground deep benchmarks, detecting a zero planned high-altitude position of the pipeline upon coordinates of the deformation control benchmarks, transferring coordinates of the deformation control benchmarks to the server and building a design digital pipeline model upon results of all measurements,
then, during service of the pipeline, measuring coordinates of the deformation control benchmarks that characterize current planned high-altitude position of the pipeline, from which a current digital pipeline model is built at the server, comparing a current digital pipeline model with the design digital pipeline model, and detecting parts of the pipeline where deflection of its current position from the design digital pipeline model exceeds permitted values,
wherein the measuring of the coordinates of deformation control benchmarks during service of the pipeline is performed with a rover having a multi-frequency GLONASS or GLONASS/GPS navigation unit employing phase use mode and arranged to receive adjusting data from the reference stations for increasing the precision of the measuring of the coordinates with the rover; wherein the rover transmits the measurements to the server.

2. The method of claim 1, **characterized in that** measurement of coordinates of the deformation control benchmarks in relation to ground deep benchmarks in the local system of coordinates characterizing the zero planned high-altitude position of the pipeline is realized by optic control devices and/or means of global positioning.

3. The method of claim 1, **characterized in that** a device (8) equipped with a GNSS receiver and means of wireless connection for the data receipt-transfer to the server is used as a mobile receiver.

4. The method of claim 1, **characterized in that** during the pipeline service, control measurements of ground deep benchmarks coordinates are realized that are stored on the server and used for measurement of the deformation control benchmarks position by optic control devices, and/or control measurements of ground deep benchmarks coordinates are made no less than once a month during the first year of the pipeline service and no less than twice a year at the remaining service period.

5. The method of claim 1, **characterized in that** deformation control benchmarks are made of the rolled steel, for example, the steel angle, pipe or fittings, with formation of a sharp angle, at this benchmarks are attached to the metal pilework or the support pile head in such way that the top of the sharp angle is the top point of the deformation control benchmark which coordinates are detected during the pipeline service.

6. The method of claim 1, **characterized in that** every pile of the pipeline support foundation is equipped by the deformation control benchmark.

7. The method of claim 1, **characterized in that** the ground deep benchmark consists of a metal pipe, the head of the benchmark is made of the stainless steel with the polished spherical surface and installed into the bore of a concrete "anchor", at this benchmark is equipped with a protective case made of the metal pipe filled by sandy nonfrost-susceptible soil.

8. The method of claim 1, **characterized in that** each benchmark is installed to the depth of no less than the depth of the border of the maximum seasonal soil thawing increased to 1 m, in particular, to the depth of no less than 11 m.

9. The method of claim 1, **characterized in that** sensors of planned high-altitude position are installed on pipeline compensators at the place of the maximum possible change of the pipeline position, and the sensor data are sent to the server.

10. The method of claim 1, **characterized in that** the reference station includes the multi-frequency navigation GLONASS or GLONASS/GPS navigation units employing phase use, a multi-frequency GLONASS or GLONASS/GPS geodetic GNSS aerial with multi-path and re-reflected signal suppression systems, the eccentricity value of the phase center that is no more than 2 mm, a device for fixing on the fixed object; a computer with the controller function to set up the equipment of the permanent reference station; a software to perform main functions of the reference station; a standby power unit.

11. A system for monitoring positions of an above-ground pipeline (5) under permafrost conditions, comprising:
deformation control benchmarks (3) adapted to be on piles of foundations of supports of the above-ground pipeline at a distance of at least 0.5 m from a ground surface;
ground deep benchmarks (1) adapted to be installed at a distance of no more than 1.5 km from each other and at least 50 meters from the supports;
**characterised by**:
reference stations (2) adapted to be installed along the above-ground pipeline, at a distance of 20-40 km from each other, each having a multi-frequency Glonass or Glonass/GPS navigation unit employing phase use mode and the reference stations adapted to receive and transfer the data to a server (7);
a rover having a multi-frequency GLONASS or GPS navigation unit employing phase use mode and arranged to receive adjusting data from the reference stations for increasing the precision of the measuring of the coordinates with the rover, and
a server (7) coupled to the reference stations and to the rover (8);
the system, such that during the installation of the ground deep benchmarks and reference stations, coordinates of the ground deep benchmarks and the reference stations in the state network are detected and the detected coordinates are translated to local coordinates and then transferred to the server, a zero measurement cycle to measure coordinates of the deformation control benchmarks in relation to ground deep benchmarks is performed, the zero planned high-altitude position of the pipeline is detected upon coordinates of the deformation control benchmarks, coordinates of deformation control benchmarks are transferred to the server and the digital pipeline model is built upon results of all measurements,
the server adapted to receive from the rover, during servicing of the pipeline, coordinates of the deformation control benchmarks which the rover is adapted to measure during the servicing of the pipeline and determine whether deflection of the above-ground pipeline has occurred by
building a current digital pipeline model that is compared with the design digital pipeline model, and detecting parts of the pipeline where deflection of its current position from the design pipeline model exceeds permitted values.

12. The system of claim 11, wherein the deformation control benchmarks are made of rolled steel that forms a sharp angle and are attached to a metal pilework or a support pile in such way that a top of the sharp angle is a top point of the deformation control benchmark and are detected during pipeline service.

13. The system of claim 11, wherein each pile of the above-ground pipeline includes a separate deformation control benchmark.

14. The system of claim 11, wherein the deep benchmarks include a metal pipe and has a head made of the stainless steel with a polished spherical surface, the metal pipe being installed into a bore of a concrete anchor and equipped with a protective case made of a metal pipe and filled with a sandy non-frost-susceptible soil.

15. The system of claim 11, wherein the ground deep benchmarks are installed to a depth that corresponds to a location where maximum seasonal soil thawing occurs rounded up to a nearest meter and is at least 11 meters or wherein the system comprises height sensors installed on pipeline compensators at a location of maximum possible change of a position of the above-ground pipeline, and the sensor data is sent to the server.

## Patentansprüche

1. Verfahren zum Überwachen einer Position von oberirdischen Rohrleitungen (5) unter Permafrostbedingungen, wobei es Folgendes beinhaltet:
Installieren von Verformungskontrollmarkierungen (3) an Pfeilern der Fundamente von Rohrleitungsträgern (6) in einem Abstand von mindestens 0,5 m von der Bodenoberfläche,
Installieren von Bodentiefenmarkierungen (1) in einem Abstand von nicht mehr als 1,5 km voneinander und mindestens 50 m von den Trägern, **gekennzeichnet durch**:
Installieren von Referenzstationen (2) entlang der Rohrleitung in einem Abstand von 20-40 km voneinander, die angepasst sind, um Daten zu empfangen und an einen Server (7) zu übertragen, wobei die Referenzstationen jeweils eine Mehrfrequenz-Navigationseinheit GLONASS oder GLONASS/GPS aufweisen, die einen Phasennutzungsmodus verwendet,
während der Installation von Bodentiefenmarkierungen und Referenzstationen, Erfassen ihrer Koordinaten in dem staatlichen geodätischen Netz und Übersetzen der erfassten Koordinaten in lokale Koordinaten und deren Übertragen an den Server, Ausführen eines Null-Messzyklus, um Koordinaten der Verformungskontrollmarkierungen in Bezug auf die Bodentiefenmarkierungen zu messen, Erfassen einer geplanten Null-Höhenposition der Rohrleitung anhand Koordinaten der Verformungskontrollmarkierungen, Übertragen der Koordinaten der Verformungskontrollmarkierungen an den Server und Erstellen eines digitalen Rohrleitungskonstruktionsmodells anhand der Resultate aller Messungen,
dann, während eines Betriebs der Rohrleitung, Messen von Koordinaten der Verformungskontrollmarkierungen, die die aktuelle geplante Höhenposition der Rohrleitung charakterisieren, aus denen ein aktuelles digitales Rohrleitungsmodell auf dem Server erstellt wird, Vergleichen eines aktuellen digitalen Rohrleitungsmodells mit dem digitalen Rohrleitungskonstruktionsmodell und Erfassen von Teilen der Rohrleitung, bei denen die Abweichung ihrer aktuellen Position von dem digitalen Rohrleitungskonstruktionsmodell zulässige Werte überschreitet,
wobei das Messen der Koordinaten von Verformungskontrollmarkierungen während einer Wartung der Rohrleitung mit einem Rover ausgeführt wird, der eine Mehrfrequenz-Navigationseinheit GLONASS oder GLONASS/GPS aufweist, die Phasennutzungsmodus einsetzt und angeordnet ist, um Einstelldaten von den Referenzstationen zu empfangen, um die Genauigkeit des Messens der Koordinaten mit dem Rover zu erhöhen; wobei der Rover die Messungen an den Server überträgt.

2. Verfahren nach Anspruch 1, **dadurch gekennzeichnet, dass** eine Messung von Koordinaten der Verformungskontrollmarkierungen in Bezug auf die Bodentiefenmarkierungen in dem lokalen Koordinatensystem, das die geplante Null-Höhenlage der Rohrleitung charakterisiert, durch optische Kontrollvorrichtungen und/oder Einrichtungen globaler Positionierung realisiert wird.

3. Verfahren nach Anspruch 1, **dadurch gekennzeichnet, dass** eine Vorrichtung (8), die mit einem GNSS-Empfänger und Einrichtungen zur drahtlosen Verbindung für die Datenempfangsübertragung zum Server ausgestattet ist, als mobiler Empfänger verwendet wird.

4. Verfahren nach Anspruch 1, **dadurch gekennzeichnet, dass** während des Betriebs der Rohrleitung Kontrollmessungen von Koordinaten von Bodentiefenmarkierungen durchgeführt werden, die auf dem Server gespeichert und zur Messung der Position von Verformungskontrollbezugspunkte durch optische Kontrollvorrichtungen verwendet werden, und/oder dass Kontrollmessungen der Koordinaten von Bodentiefenmarkierungen während des ersten Jahrs des Rohrleistungsbetriebs nicht weniger als einmal pro Monat und während der verbleibenden Betriebszeit nicht weniger als zweimal pro Jahr durchgeführt werden.

5. Verfahren nach Anspruch 1, **dadurch gekennzeichnet, dass** Verformungskontrollmarkierungen aus gewalztem Stahl, z. B. Winkel, Rohre oder Formstücke aus Stahl mit Bildung eines spitzen Winkels hergestellt werden, wobei diese Markierungen an der Metallpfeilerkonstruktion oder dem Trägerpfeilkopf auf eine Weise angebracht werden, dass die Spitze des scharfen Winkels der oberste Punkt der Verformungskontrollmarkierung ist, deren Koordinaten während des Rohrleitungsbetriebs erfasst werden.

6. Verfahren nach Anspruch 1, **dadurch gekennzeichnet, dass** jeder Pfeiler des Rohrleitungsträgerfundaments mit den Verformungskontrollmarkierungen ausgerüstet ist.

7. Verfahren nach Anspruch 1, **dadurch gekennzeichnet, dass** die Bodentiefenmarkierung aus einem Metallrohr besteht, der Kopf der Markierung aus Edelstahl mit polierter kugelförmiger Oberfläche gefertigt ist und in der Bohrung eines "Betonankers" installiert ist, wobei diese Markierung mit einer Schutzhülle aus dem Metallrohr ausgerüstet ist, die mit sandigem, nicht frostempfindlichem Boden gefüllt ist.

8. Verfahren nach Anspruch 1, **dadurch gekennzeichnet, dass** jede Markierung in einer Tiefe von nicht weniger als der Tiefe der Grenze der maximalen saisonalen Bodenschmelze, inkrementiert um 1 m, insbesondere in einer Tiefe von nicht weniger als 11 m, installiert wird.

9. Verfahren nach Anspruch 1, **dadurch gekennzeichnet, dass** Sensoren für eine geplante Höhenlage an Rohrleitungskompensatoren an der Stelle der maximal möglichen Änderung der Rohrleitungsposition installiert werden und die Sensordaten an den Server gesendet werden.

10. Verfahren nach Anspruch 1, **dadurch gekennzeichnet, dass** die Referenzstation die Navigationseinheiten für Mehrfrequenz-Navigation GLONASS oder GLONASS/GPS, die Phasennutzung einsetzt, eine geodätische Mehrfrequenzantenne für GLONASS oder GLONASS/GPS mit Systemen zur Unterdrückung von Mehrweg- und Reflexionssignalen, einen Exzentrizitätswert der Phasenmitte, der nicht mehr als 2 mm ist, eine Vorrichtung zum Befestigen an dem festen Objekt, einen Computer mit der Steuerungsfunktion zum Einrichten der Ausrüstung der permanenten Referenzstation, eine Software zum Ausführen der Hauptfunktionen der Referenzstation und eine Notstromeinheit, beinhaltet.

11. System zum Überwachen von Positionen einer oberirdischen Rohrleitung (5) unter Permafrostbedingungen, umfassend:
Verformungskontrollmarkierungen (3), die angepasst sind, um an Pfeilern von Fundamenten von Trägern der oberirdischen Rohrleitung in einem Abstand von mindestens 0,5 m von einer Bodenoberfläche zu sein;
Bodentiefenmarkierungen (1), die angepasst sind, um in einem Abstand von nicht mehr als 1,5 km voneinander und mindestens 50 m von den Trägern installiert zu werden;
**gekennzeichnet durch**:
Referenzstationen (2), die angepasst sind, um entlang der oberirdischen Rohrleitung in einem Abstand von 20-40 km voneinander installiert zu werden, die eine Mehrfrequenz-Navigationseinheit Glonass oder Glonass/GPS aufweisen, die Phasennutzungsmodus einsetzt, und wobei die Referenzstationen angepasst sind, um die Daten zu empfangen und an einen Server (7) zu übertragen;
einen Rover, der eine Mehrfrequenz-Navigationseinheit GLONASS oder GPS aufweist, die Phasennutzungsmodus einsetzt verwendet und angeordnet ist, um Einstelldaten von den Referenzstationen zu empfangen, um die Genauigkeit der Messung der Koordinaten mit dem Rover zu erhöhen, und
einen Server (7), der mit den Referenzstationen und mit dem Rover (8) gekoppelt ist;
das System, sodass während der Installation der Bodentiefenmarkierungen und der Referenzstationen die Koordinaten der Bodentiefenmarkierungen und der Referenzstationen in dem Zustandsnetz erfasst und die erfassten Koordinaten in lokale Koordinaten umgerechnet und dann an den Server übertragen werden, ein Null-Messzyklus zum Messen von Koordinaten der Verformungskontrollmarkierungen in Bezug auf Bodentiefenmarkierungen ausgeführt wird, die geplante Null-Höhenposition der Rohrleitung anhand Koordinaten der Verformungskontrollmarkierungen erfasst wird, die Koordinaten der Verformungskontrollmarkierungen an den Server übertragen werden und das digitale Rohrleitungsmodell anhand der Resultate aller Messungen erstellt wird,
der Server angepasst ist, um von dem Rover während einer Wartung der Rohrleitung Koordinaten der Verformungskontrollmarkierungen zu empfangen, zu deren Messung der Rover während einer Wartung der Rohrleitung und Bestimmung, ob eine Ablenkung der oberirdischen Rohrleitung erfolgt ist, angepasst ist, indem er ein aktuelles digitales Rohrleitungsmodell erstellt, das mit dem digitalen Rohrleitungskonstruktionsmodell verglichen wird, und Teile der Rohrleitung erfasst, bei denen die Ablenkung ihrer aktuellen Position von dem Rohrleitungskonstruktionsmodell zulässige Werte überschreitet.

12. System nach Anspruch 11, wobei die Verformungskontrollmarkierungen aus gewalztem Stahl gefertigt sind, der einen spitzen Winkel bildet, und an einem Metallpfeilerwerk oder einem Trägerpfeiler angebracht sind, sodass eine Spitze des spitzen Winkels ein oberer Punkt der Verformungskontrollmarkierung ist und während eines Rohrleitungsbetriebs erfasst wird.

13. System nach Anspruch 11, wobei jeder Pfeiler der oberirdischen Rohrleitung eine separate Verformungskontrollmarkierung beinhaltet.

14. System nach Anspruch 11, wobei die Tiefenmarkierungen ein Metallrohr beinhalten und einen Kopf aufweisen, der aus Edelstahl gefertigt ist, mit einer polierten kugelförmigen Oberfläche, wobei das Metallrohr in einer Bohrung eines Betonankers installiert und mit einem Schutzgehäuse aus einem Metallrohr versehen ist, das mit einem sandigen, nicht frostanfälligen Boden gefüllt ist.

15. System nach Anspruch 11, wobei die Bodentiefenmarkierungen in einer Tiefe installiert werden, die einer Stelle entspricht, an der das maximale saisonale Auftauen des Bodens aufgerundet auf den nächsten Meter auftritt, und mindestens 11 Meter ist, oder wobei das System Höhensensoren umfasst, die an Rohrleitungskompensatoren an einer Stelle installiert sind, an der sich die Position der oberirdischen Rohrleitung maximal ändern kann, und die Sensordaten an den Server gesendet werden.

## Revendications

1. Procédé permettant de surveiller une position de pipelines hors-sol (5) dans des conditions de pergélisol, moyennant quoi le procédé inclut les étapes ci-dessous consistant à :
installer des repères de contrôle de déformation (3) sur des pieux des fondations de supports de pipelines (6) à une distance d'au moins 0,5 m de la surface du sol ;
installer des repères de profondeur de sol (1) à une distance maximale de 1,5 km les uns des autres, et à une distance d'au moins 50 mètres des supports ;
le procédé étant **caractérisé par** les étapes ci-dessous consistant à :
installer des stations de référence (2), le long du pipeline, à une distance de 20 km à 40 km les unes des autres, lesquelles sont aptes à recevoir et à transférer des données à destination / en provenance d'un serveur (7), les stations de référence présentant chacune une unité de navigation GLONASS ou GLONASS/GPS multifréquence employant un mode d'utilisation en phase ;
au cours de l'installation des repères de profondeur de sol et des stations de référence, détecter leurs coordonnées dans le réseau géodésique national, et traduire les coordonnées détectées en des coordonnées locales et les transférer au serveur, mettre en oeuvre un cycle de mesures initiales pour mesurer des coordonnées des repères de contrôle de déformation par rapport aux repères de profondeur de sol, détecter une position à haute altitude planifiée initiale du pipeline en fonction de coordonnées des repères de contrôle de déformation, transférer des coordonnées des repères de contrôle de déformation au serveur, et construire un modèle de pipeline numérique en fonction des résultats de toutes les mesures ;
ensuite, au cours de l'entretien du pipeline, mesurer des coordonnées des repères de contrôle de déformation qui caractérisent une position à haute altitude planifiée en cours du pipeline, à partir de laquelle un modèle de pipeline numérique en cours est construit, au niveau du serveur, comparer le modèle de pipeline numérique en cours au modèle de pipeline numérique de conception, et détecter des parties du pipeline où une déviation de sa position en cours par rapport au modèle de pipeline numérique de conception est supérieure à des valeurs autorisées ;
dans laquelle l'étape de mesure des coordonnées de repères de contrôle de déformation au cours de l'entretien du pipeline est mise en oeuvre à l'aide d'un rover équipé d'une unité de navigation GLONASS ou GLONASS/GPS multifréquence employant un mode d'utilisation en phase et agencé de manière à recevoir des données d'ajustement en provenance des stations de référence afin d'augmenter la précision de la mesure des coordonnées à l'aide du rover ; et dans lequel le rover transmet les mesures au serveur.

2. Procédé selon la revendication 1, **caractérisé en ce que** la mesure des coordonnées des repères de contrôle de déformation par rapport aux repères de profondeur de sol dans le système de coordonnées locales caractérisant la position à haute altitude planifiée initiale du pipeline est réalisée par des dispositifs de contrôle optique et/ou des moyens de positionnement mondial.

3. Procédé selon la revendication 1, **caractérisé en ce qu'**un dispositif (8) équipé d'un récepteur de système mondial de navigation par satellite, GNSS, et de moyens de connexion sans fil pour la réception et le transfert de données au serveur est utilisé en tant qu'un récepteur mobile.

4. Procédé selon la revendication 1, **caractérisé en ce que**, au cours de l'entretien du pipeline, sont réalisées des mesures de contrôle de coordonnées de repères de profondeur de sol qui sont stockées sur le serveur et utilisées pour la mesure de la position de repères de contrôle de déformation par des dispositifs de contrôle optique, et/ou sont réalisées des mesures de contrôle de coordonnées de repères de profondeur de sol au moins une fois par mois pendant la première année de la mise en service du pipeline et au moins deux fois par an au cours de la période de fonctionnement restante.

5. Procédé selon la revendication 1, **caractérisé en ce que** les repères de contrôle de déformation sont constitués d'acier laminé, par exemple de l'acier cornier, un tuyau ou des raccords en acier, et un angle vif est formé, au niveau de ces repères, et ils sont fixés au pieu métallique ou à la tête de pieu de support, de telle manière que la partie supérieure de l'angle vif constitue le point supérieur du repère de contrôle de déformation dont les coordonnées sont détectées pendant l'entretien du pipeline.

6. Procédé selon la revendication 1, **caractérisé en ce que** chaque pieu de la fondation de support de pipeline est équipé du repère de contrôle de déformation.

7. Procédé selon la revendication 1, **caractérisé en ce que** le repère de profondeur de sol est constitué d'un tuyau métallique, la tête du repère est en acier inoxydable, avec une surface sphérique polie, et le tuyau métallique est installé dans l'alésage d'un ancrage en béton, au niveau de ce repère, et est équipé d'une enveloppe de protection constituée d'un tuyau métallique et remplie d'une terre sablonneuse non sensible au gel.

8. Procédé selon la revendication 1, **caractérisé en ce que** chaque repère est installé à une profondeur non inférieure à la profondeur de la limite du dégel saisonnier maximal du sol, portée à 1 m, et en particulier, à une profondeur qui n'est pas inférieure à 11 m.

9. Procédé selon la revendication 1, **caractérisé en ce que** des capteurs de position à haute altitude planifiée sont installés sur des compensateurs de pipeline à l'emplacement de la modification maximale possible de la position de pipeline, et **en ce que** les données de capteurs sont envoyées au serveur.

10. Procédé selon la revendication 1, **caractérisé en ce que** la station de référence inclut les unités de navigation GLONASS ou GLONASS/GPS multifréquence employant un mode d'utilisation en phase, une antenne aérienne de système GNSS géodésique GLONASS ou GLONASS/GPS multifréquence avec des systèmes de suppression de signaux multi-trajets et re-réfléchis, dans laquelle la valeur d'excentricité du centre de phase ne dépasse pas 2 mm, un dispositif permettant une fixation sur l'objet fixe ; un ordinateur avec la fonction de contrôleur pour configurer l'équipement de la station de référence permanente ; un logiciel pour mettre en oeuvre des fonctions principales de la station de référence ; et une unité d'alimentation de secours.

11. Système de surveillance de positions d'un pipeline hors-sol (5) dans des conditions de pergélisol, comprenant :
des repères de contrôle de déformation (3) aptes à être disposés sur des pieux de fondations de supports du pipeline hors-sol à une distance d'au moins 0,5 m de la surface du sol ;
des repères de profondeur de sol (1) aptes à être installés à une distance maximale de 1,5 km les uns des autres, et à une distance d'au moins 50 mètres des supports ;
**caractérisé par** :
des stations de référence (2) aptes à être installées le long du pipeline hors-sol, à une distance de 20 à 40 km les unes des autres, chacune présentant une unité de navigation GLONASS ou GLONASS/GPS multifréquence employant un mode d'utilisation en phase, et les stations de référence étant aptes à recevoir et à transférer les données à un serveur (7) ;
un rover présentant une unité de navigation GLONASS ou GPS multifréquence employant un mode d'utilisation en phase et agencé de manière à recevoir des données d'ajustement, en provenance des stations de référence, afin d'augmenter la précision de la mesure des coordonnées avec le rover ; et
un serveur (7) couplé aux stations de référence et au rover (8) ;
le système, de sorte que, au cours de l'installation des repères de profondeur de sol et des stations de référence, des coordonnées des repères de profondeur de sol et des stations de référence dans le réseau national sont détectées et les coordonnées détectées sont traduites en des coordonnées locales puis transférées au serveur, un cycle de mesures initiales pour mesurer des coordonnées des repères de contrôle de déformation par rapport aux repères de profondeur de sol est mis en oeuvre, la position à haute altitude planifiée initiale du pipeline est détectée en fonction de coordonnées des repères de contrôle de déformation, des coordonnées des repères de contrôle de déformation sont transférées au serveur, et le modèle de pipeline numérique est construit en fonction des résultats de toutes les mesures ; et
le serveur est apte à recevoir, en provenance du rover, au cours de l'entretien du pipeline, des coordonnées des repères de contrôle de déformation que le rover est apte à mesurer au cours de l'entretien du pipeline, et à déterminer si une déviation du pipeline hors-sol s'est produite en construisant un modèle de pipeline numérique en cours qui est comparé au modèle de pipeline numérique de conception, et en détectant des parties du pipeline où une déviation de sa position en cours par rapport au modèle de pipeline de conception est supérieure à des valeurs autorisées.

12. Système selon la revendication 11, dans lequel les repères de contrôle de déformation sont constitués d'acier laminé formant un angle vif, sont fixés à un pieu métallique ou à un pieu de support, de telle manière qu'une partie supérieure de l'angle vif constitue un point supérieur du repère de contrôle de déformation, et les repères sont détectés au cours de l'entretien du pipeline.

13. Système selon la revendication 11, dans lequel chaque pieu du pipeline hors-sol inclut un repère de contrôle de déformation individuel.

14. Système selon la revendication 11, dans lequel les repères de profondeur incluent un tuyau métallique et présentent une tête en acier inoxydable avec une surface sphérique polie, le tuyau métallique étant installé dans un alésage d'un ancrage en béton et équipé d'une enveloppe de protection constituée d'un tuyau métallique et remplie d'une terre sablonneuse non sensible au gel.

15. Système selon la revendication 11, dans lequel les repères de profondeur de sol sont installés à une profondeur qui correspond à un emplacement où le dégel saisonnier maximal du sol se produit, arrondi au mètre supérieur le plus proche, et qui est d'au moins 11 mètres, ou dans lequel le système comprend des capteurs de hauteur installés sur des compensateurs de pipeline à un emplacement de la modification maximale possible d'une position du pipeline hors-sol, et les données de capteurs sont envoyées au serveur.
